# EUROPEAN PATENT APPLICATION

(11) **EP 4 564 446 A2**
(43) Date of publication of application: **04.06.2025**
(21) Application number: 24216580.1
(22) Date of filing: 29.11.2024
(51) Int. Cl.: H01M 4/04, H01M 4/139

(54) **APPARATUS FOR MANUFACTURING DRY ELECTRODE AND DRY ELECTRODE MANUFACTURING METHOD**

(30) Priority: 01.12.2023 KR 20230172635
(71) Applicant: SAMSUNG SDI CO., LTD., Yongin-si, Gyeonggi-do 17084 (KR)
(72) Inventor: LEE, Jinhyon, 17084 Yongin-si (KR); KWON, Seunguk, 17084 Yongin-si (KR); PYUN, Ahram, 17084 Yongin-si (KR); KWON, Ilkyong, 17084 Yongin-si (KR)
(74) Representative: Marks & Clerk LLP

(57) **Abstract**

An apparatus for manufacturing a dry electrode includes a first feeder configured to supply a first fine powder and a plurality of first rollers that calender the first fine powder supplied from the first feeder into a first free-standing film. A first laminating roller is positioned adjacent to the plurality of first rollers and is configured to laminate the first free-standing film on a surface of a current collector. A control portion is connected to the first feeder and controls timing of supply of the first fine powder by the first feeder.

## Description

### BACKGROUND

### (a) Field

The present disclosure relates to an apparatus for manufacturing a dry electrode and a dry electrode manufacturing method.

### (b) Description of the Related Art

A rechargeable battery is a battery that may be charged and discharged.

The need for a manufacturing apparatus for a dry electrode for a rechargeable battery that does not use a solvent has recently increased.

A conventional dry electrode manufacturing apparatus may calender a fine powder including an active material, a conductive material, and a binder into a free-standing film using a calendering roll or the like, and the apparatus may laminate the free-standing film on a current collector to manufacture the dry electrode. The conventional dry electrode manufacturing apparatus may manufacture the dry electrode by continuously laminating the free-standing film on the current collector. As such, there is a problem in that it is difficult to form an uncoated portion where the free-standing film is not coated on the current collector.

### SUMMARY

One or more embodiments of the present disclosure provide an apparatus for manufacturing a dry electrode and a method of manufacturing a dry electrode that includes an uncoated portion formed by intermittently laminating a free-standing film to a current collector.

An apparatus for manufacturing a dry electrode according to aspects of one or more embodiments includes: a first feeder configured to supply a first fine powder; a plurality of first rollers configured to calender the first fine powder supplied from the first feeder into a first free-standing film; a first laminating roller that is positioned adjacent to the plurality of first rollers and is configured to laminate the first free-standing film on a first surface of a current collector; and a control portion that is connected to the first feeder and is configured to control timing of supply of the first fine powder by the first feeder.

The control portion may be configured to control the first feeder to intermittently supply the first fine powder to the plurality of first rollers. The plurality of first rollers may be configured to calender the first fine powder into a plurality of first free-standing films that are spaced apart from each other.

The first laminating roller may be configured to intermittently laminate each of the first free-standing films to the first surface of the current collector.

The control portion may include a first suction portion that is positioned adjacent to the first feeder. The first suction portion may be configured to intermittently suck the first fine powder discharged from the first feeder.

The first suction portion may be connected to the first feeder. The first suction portion may be configured to resupply the first fine powder sucked from the first feeder back to the first feeder.

The control portion may further include a first sensor disposed with the plurality of first rollers and configured to sense an interval between each of the first free-standing films.

The control portion may be configured to control an intermittent suction timing of the first fine powder by the first suction portion based on the interval between the first free-standing films sensed by the first sensor.

The apparatus may further include: a second feeder configured to supply a second fine powder; a plurality of second rollers configured to calender the second fine powder supplied from the second feeder into a second free-standing film; and a second laminating roller that is positioned between the plurality of second rollers and the first laminating roller, the second laminating roller being configured to laminate the second free-standing film on a second surface of the current collector. The control portion may be connected to the second feeder and configured to control a timing of supply of the second fine powder by the second feeder.

The control portion may be configured to intermittently supply the second fine powder to the plurality of second rollers. The plurality of second rollers may be configured to calender the second fine powder into a plurality of second free-standing films that are spaced apart from each other.

The second laminating roller may be configured to intermittently laminate each of the second free-standing films on the second surface of the current collector.

The control portion may include a second suction portion that is positioned adjacent to the second feeder, and the second suction portion may be configured to intermittently suck the second fine powder discharged from the second feeder.

The second suction portion may be connected to the second feeder. The second suction portion may be configured to resupply the second fine powder sucked from the second feeder back to the second feeder.

The control portion may further include a second sensor disposed with the plurality of second rollers and configured to sense an interval between each of the plurality of second free-standing films.

The control portion may be configured to control an intermittent suction timing of the second fine powder of the second suction portion based on the interval between the second free-standing films sensed by the second sensor.

The apparatus may further include a source roll configured to supply the current collector. The source roll may be configured to supply the current collector between the first laminating roller and the second laminating roller. The apparatus may further include a rewinding roll configured to rewind the current collector on which the first free-standing film is laminated. The rewinding roll may be configured to rewind the current collector on which the first free-standing film and the second free-standing film are laminated.

A method for manufacturing a dry electrode according to aspects of one or more embodiments includes calendering a first fine powder into a first free-standing film; laminating the first free-standing film on a first surface of a current collector; and controlling timing of supply of the first fine powder.

The controlling of the timing of supply of the first fine powder may include intermittently supplying the first fine powder. The calendering of the first fine powder into the first free-standing film may include calendering the first fine powder intermittently supplied into a plurality of first free-standing films that are spaced apart from each other.

The laminating of the first free-standing film on the first surface of the current collector may include intermittently laminating each of the first free-standing films on the first surface of the current collector.

The method may further include calendering a second fine powder into a second free-standing film; laminating the second free-standing film on a second surface of the current collector; and controlling timing of supply of the second fine powder.

The controlling timing of supply of the first fine powder and the controlling timing of supply of the second fine powder may be simultaneously performed.

According to one or more embodiments, an apparatus for manufacturing a dry electrode and a method for manufacturing a dry electrode are provided that manufacture the dry electrode including an uncoated portion by intermittently laminating a free-standing film to a current collector.

At least some of the above and other features of the invention are set out in the claims.

### BRIEF DESCRIPTION OF THE DRAWINGS

FIG. 1 is a side view showing an apparatus for manufacturing a dry electrode according to embodiments of the invention.
FIG. 2 is a side view showing that a first free-standing film and a second free-standing film are laminated on a current collector shown in a portion A of FIG. 1.
FIG. 3 is a plan view showing that the first free-standing film is laminated on the current collector by the apparatus for manufacturing the dry electrode according to the embodiments of the invention.
FIG. 4 is a side view showing an apparatus for manufacturing a dry electrode according to other embodiments of the invention.
FIG. 5 is a side view showing that a first free-standing film and a second free-standing film are laminated on a current collector shown in a portion B of FIG. 4.
FIG. 6 is a flowchart showing a method for manufacturing the dry electrode according to embodiments of the invention.

### DETAILED DESCRIPTION OF THE EMBODIMENTS

Embodiments of the present disclosure will be described more fully hereinafter with reference to the accompanying drawings so that those skilled in the art can easily implement the embodiments. The present disclosure may be modified in various different ways, all without departing from the scope of the present disclosure.

Unless explicitly described to the contrary, the word "comprise" and variations such as "comprises" or "comprising" will be understood to imply the inclusion of stated elements but not the exclusion of any other elements.

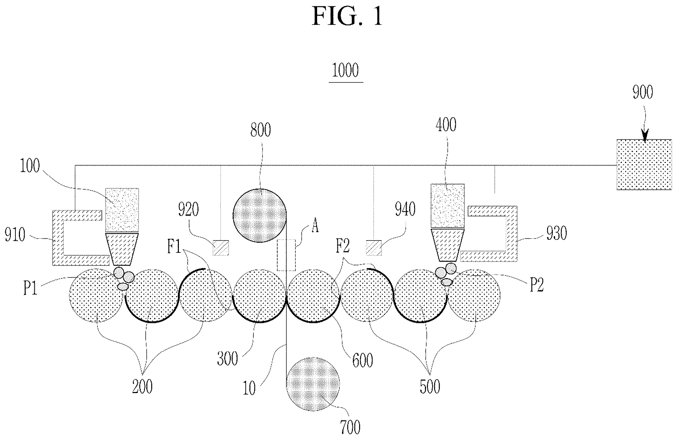

An apparatus for manufacturing a dry electrode according to embodiments will be described with reference to FIGS. 1 to 3.

The apparatus may be an apparatus for manufacturing a dry electrode for a rechargeable battery. But the present disclosure is not limited thereto, and the apparatus for manufacturing the dry electrode may be an apparatus for manufacturing various dry electrodes.

FIG. 1 is a side view showing the apparatus 1000 for manufacturing the dry electrode according to embodiments of the invention.

Referring to FIG. 1, the dry electrode manufacturing apparatus 1000 according to the embodiments may include a first feeder 100, a first roller 200, a first laminating roller 300, a second feeder 400, a second roller 500, a second laminating roller 600, a source roll 700, a rewinding roll 800, and a control portion (controller) 900.

The first feeder 100 may supply a first fine powder P1. In particular, the first feeder 100 may supply the first fine powder P1 to the first roller 200. The first fine powder P1 may include various known active materials, various known conductive materials, and various known binders. The first fine powder P1 may include a metal oxide-based material. The conductive material may include carbon black. The binder may include polytetrafluoroethylene (PTFE). But the present disclosure is not limited to such materials. The first fine powder P1 may be prepared by mixing the active material, the conductive material, and the binder using various known mixing means (or various known mixing devices) and fibrillizing the mixture into a fibrillized dry powder using various known fibrillizing means (or various known fibrillizing devices), but the present disclosure is not limited thereto.

The first feeder 100 may include various known storage means (or various known storage devices) that can store the first fine powder P1. The first feeder may also include various known discharge means (or various known discharge devices) supplying the first fine powder P1 to the first roller 200. The first fine powder P1 supplied from the first feeder 100 to the first roller 200 may be calendered into a first free-standing film F1.

The first roller 200 may include a plurality of first rollers 200. The plurality of first rollers 200 may calender the first fine powder P1 supplied from the first feeder 100 into the first free-standing film F1. The plurality of first rollers 200 may be disposed in a first direction, and the first fine powder P1 may be supplied between the plurality of first rollers 200 to be calendared into the first free-standing film F1. The plurality of first rollers 200 may calender the first fine power P1 into the first free-standing film F1 by rolling and stretching the first fine powder P1, but the present disclosure is not limited thereto. Each of the plurality of first rollers 200 may rotate at the same angular speed. But the present disclosure is not limited thereto, as each of the plurality of first rollers 200 may rotate at different angular speeds. For example, each of the plurality of first rollers 200 may rotate at a gradually faster angular speed or at a gradually slower angular speed in the first direction toward the current collector 10. The first laminating roller 300 may be disposed adjacent to the first roller 200 that is at an end in the direction that the plurality of first rollers 200 are positioned. The first laminating roller 300 may laminate the first free-standing film F1 calendared by the plurality of first rollers 200 to one surface of the current collector 10. The first laminating roller 300 may include various known laminating means (or various known laminating devices). The current collector 10 may move between the first laminating roller 300 and the second laminating roller 600 in a second direction crossing a first direction that the first rollers are positioned along. Here, the first direction may be a horizontal direction, and the second direction may be a vertical direction, but the present disclosure is not limited thereto.

The second feeder 400 may supply a second fine powder P2. In particular, the second feeder 400 may supply the second fine powder P2 to the second roller 500. The second fine powder P2 may include various known active materials, various known conductive materials, and various known binders. The second fine powder P2 may include a metal oxide-based material. The conductive material may include carbon black. The binder may include polytetrafluoroethylene (PTFE). But the present disclosure is not limited to such materials. The second fine powder P2 may be prepared by mixing the active material, the conductive material, and the binder using various known mixing means (or various known mixing devices) and fibrillizing the mixture into a fibrillized dry powder using various known fibrillizing means (or various known fibrillizing devices). But the present disclosure is not limited thereto.

The second feeder 400 may include various known storage means (or various known storage devices) storing the second fine powder P2 and various known discharge means (or various known discharge devices) supplying the second fine powder P2 to the second roller 500. The second fine powder P2 supplied from the second feeder 400 to the second roller 500 may be calendered into a second free-standing film F2.

The second roller 500 may include a plurality of second rollers 500. The plurality of second rollers 500 may calender the second fine powder P2 supplied from the second feeder 400 into the second free-standing film F2. The plurality of second rollers 500 may be disposed in the first direction, and the second fine powder P2 may be supplied between the plurality of second rollers 500 to be calendared into the second free-standing film F2. The plurality of second rollers 500 may calender the second free-standing film F2 by rolling and stretching the second fine powder P2, but the present disclosure is not limited thereto. Each of the plurality of second rollers 500 may rotate at the same angular speed, but the present disclosure is not limited thereto, and each of the plurality of second rollers 500 may rotate at different angular speeds. For example, each of the plurality of second rollers 500 may rotate at a gradually faster angular speed or at a gradually slower angular speed in the first direction toward the position where the current collector 10 is disposed. The second laminating roller 600 may be positioned adjacent to the second roller 500 that is positioned at an end along the first direction among the plurality of second rollers 500.

The second laminating roller 600 may be positioned between the plurality of second rollers 500 and the first laminating roller 300. The second laminating roller 600 may laminate the second free-standing film F2 calendared by the plurality of second rollers 500 on the other surface of the current collector 10. The second laminating roller 600 may include various known laminating means (or various known laminating devices). The current collector 10 may move between the second laminating roller 600 and the first laminating roller 300 in the second direction that crosses the first direction.

The source roll 700 may supply the current collector 10 between the first laminating roller 300 and the second laminating roller 600. The source roll 700 may include various known supply means (or various known supply devices). The source roll 700 supplies the current collector 10 between the first laminating roller 300 and the second laminating roller 600 and various winding means (or various winding devices) winding the current collector 10.

The rewinding roll 800 may rewind the current collector 10 on which the first free-standing film F1 and the second free-standing film F2 are laminated. The rewinding roll 800 may include various known rewinding means (or various known rewinding devices) so as to rewind the current collector 10 on which the first free-standing film F1 and the second free-standing film F2 are laminated.

The control portion 900 may be connected to the first feeder 100 and the second feeder 400. The control portion 900 may control timing of supply of the first fine powder P1 from the first feeder 100 and may control timing of supply of the second fine powder P2 from the second feeder 400. The control portion 900 may include various control means (or various control devices).

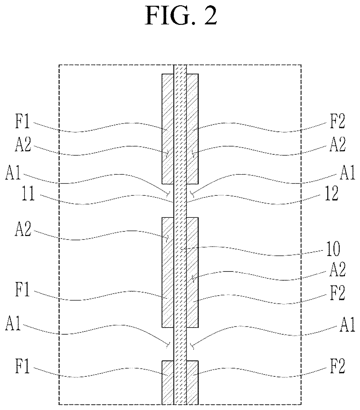

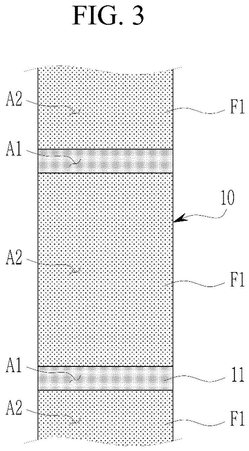

FIG. 2 is a side view showing that the first free-standing film F1 and the second free-standing film F2 are laminated on the current collector 10 shown in portion A of FIG. 1. FIG. 3 is a plan view showing the first free-standing film F1 laminated on the current collector 10 by the apparatus 1000 for manufacturing the dry electrode according to the embodiments.

Referring to FIGS. 1 to 3, the control portion 900 may control the supply timing of the first fine powder P1 from the first feeder 100, and the first feeder 100 with supply timing controlled by the control portion 900 may intermittently supply the first fine powder P1 to the plurality of first rollers 200. The plurality of first rollers 200 may calender the intermittently supplied first fine powder P1 into a plurality of first free-standing films F1 spaced apart from each other. The first laminating roller 300 may intermittently laminate each of the plurality of first free-standing films F1 spaced apart from each other by the plurality of first rollers 200 onto a first surface 11 of the current collector 10. The supply timing of the first fine powder P1 of the first feeder 100 may be controlled by the control portion 900 such that the first fine powder P1 is intermittently supplied to the plurality of first rollers 200 and such that the plurality of first free-standing films F1 that are spaced apart from each other are calendered by the plurality of first rollers 200. Each of the plurality of first free-standing films F1 may be intermittently laminated on the first surface 11 of the current collector 10 by the first laminating roller 300, so that the first free-standing film F1 is coated on a coating portion A2 of the current collector 10 shown in FIG. 2 and FIG. 3 and the first free-standing film F1 is not coated on an uncoated portion A1 of the current collector 10. Thus, the dry electrode including the coating portion A2 including an electrode active material and the uncoated portion A1 that does not include the electrode active material may be manufactured.

The control portion 900 may control the timing of supply of the second fine powder P2 from the second feeder 400, and the second feeder 400 of which the supply timing is controlled by the control portion 900 may intermittently supply the second fine powder P2 to the plurality of second rollers 500. The plurality of second rollers 500 may calender the second fine powder P2 intermittently supplied into a plurality of second free-standing films F2 spaced apart from each other. The second laminating roller 600 may intermittently laminate each of the plurality of second free-standing films F2 spaced apart from each other by the plurality of second rollers 500 onto a second surface 12 of the current collector 10. The timing of supply of the second fine powder P2 from the second feeder 400 may be controlled by the control portion 900 such that the second fine powder P2 is intermittently supplied to the plurality of second rollers 500 and the plurality of second free-standing films F2 spaced apart from each other are calendered by the plurality of second rollers 500. Each of the plurality of second free-standing films F2 may be intermittently laminated on the second surface 12 of the current collector 10 by the second laminating roller 600 such that the second free-standing film F2 is coated on the coating portion A2 of the current collector 10 shown in FIG. 2 and the second free-standing film F2 is not coated on the uncoated portion A1 of the current collector 10. Thus, the dry electrode including the coating portion A2 including an electrode active material and the uncoated portion A1 that does not include the electrode active material may be manufactured.

The control portion 900 may synchronize the timing of supply of the first fine powder P1 from the first feeder 100 with the timing of supply of the second fine powder P2 from the second feeder 400 such that the first free-standing films F1 and the second free-standing films F2 respectively laminated on the first surface 11 and the second surface 12 of the current collector 10 overlap each other in a horizontal direction as shown in FIG. 2. As another example, the control portion 900 may synchronize the timing supply of the first fine powder P1 from the first feeder 100 with the timing of supply of the second fine powder P2 from the second feeder 400 such that the first free-standing films F1 and the second free-standing films F2 respectively laminated on the first surface 11 and the second surface 12 of the current collector 10 do not overlap each other in a horizontal direction in the manner shown in FIG. 2.

The control portion 900 may include a first suction portion 910, a first sensor 920, a second suction portion 930, and a second sensor 940.

The first suction portion 910 may be positioned adjacent to the first feeder 100 and may intermittently suck the first fine powder P1 discharged from the first feeder 100. As the first suction portion 910 intermittently sucks the first fine powder P1 discharged from the first feeder 100, the supply timing of the first fine powder P1 of the first feeder 100 may be controlled by the control portion 900, and the first feeder 100 of which the supply timing is controlled by the control portion 900 may intermittently supply the first fine powder P1 to the plurality of first rollers 200. The first suction portion 910 may be positioned within a movement path of the first fine powder P1 supplied by the first feeder 100, but the present disclosure is not limited thereto. The first suction portion 910 may be connected to the first feeder 100. The first suction portion 910 may resupply the first fine powder P1 sucked from the first feeder 100 to the first feeder 100. The first suction portion 910 may include various known suction means (or various known suction devices) and various known transfer means (or various known transfer devices).

The first sensor 920 may be positioned on the plurality of first rollers 200. The first sensor 920 may sense an interval between each of the first free-standing films F1 calendered by the plurality of first rollers 200. The control portion 900 may control an intermittent suction timing of the first fine powder P1 by the first suction portion 910 based on the interval between the first free-standing films F1 sensed by the first sensor 920. The first sensor 920 may include various known sensing means (or various known sensing devices) such as a vision sensor, a laser beam, and the like. Thus, timing of supply of the first fine powder P1 from the first feeder 100 may be controlled based on the interval between the first free-standing films F1. Accordingly, the interval between the first free-standing films F1 that are intermittently laminated on the first surface 11 of the current collector 10 may be controlled so that a length of the coating portion A2 coated with the first free-standing film F1 and an interval between uncoated portions A1 that are not coated with the first free-standing film F1 are controlled.

The second suction portion 930 may be positioned adjacent to the second feeder 400 and may intermittently suck the second fine powder P2 discharged from the second feeder 400. Because the second suction portion 930 intermittently sucks the second fine powder P2 discharged from the second feeder 400, the timing of supply of the second fine powder P2 from the second feeder 400 may be controlled by the control portion 900, and the second feeder 400 controlled by the control portion 900 may intermittently supply the second fine powder P2 to the plurality of second rollers 500. The second suction portion 930 may be positioned within a movement path of the second fine powder P2 supplied by the second feeder 400, but the present disclosure is not limited thereto. The second suction portion 930 may be connected to the second feeder 400. The second suction portion 930 may resupply the second fine powder P2 sucked from the second feeder 400 to the second feeder 400. The second suction portion 930 may include various known suction means (or various known suction devices) and various known transfer means (or various known transfer devices).

The second sensor 940 may be positioned on the plurality of second rollers 500. The second sensor 940 may sense an interval between each of the second free-standing films F2 that are calendered by the plurality of second rollers 500. The control portion 900 may control an intermittent suction timing of the second fine powder P2 by the second suction portion 930 based on the interval between the second free-standing films F2 sensed by the second sensor 940. The second sensor 940 may include various known sensing means (or various known sensing devices) such as a vision sensor, a laser beam, and the like. Thus, the timing of supply of the second fine powder P2 from the second feeder 400 may be controlled based on the interval between the second free-standing films F2. Accordingly, the interval between the second free-standing films F2 that are intermittently laminated on the second surface 12 of the current collector 10 may be controlled so that a length of the coating portion A2 coated with the second free-standing film F2 and an interval between uncoated portions A1 that are not coated with the second free-standing film F2 are controlled.

The first free-standing film F1 and the second free-standing film F2 may be intermittently laminated on the current collector 10 so that the dry electrode manufacturing apparatus 1000 manufacturing the dry electrode including the uncoated portion A1 is provided.

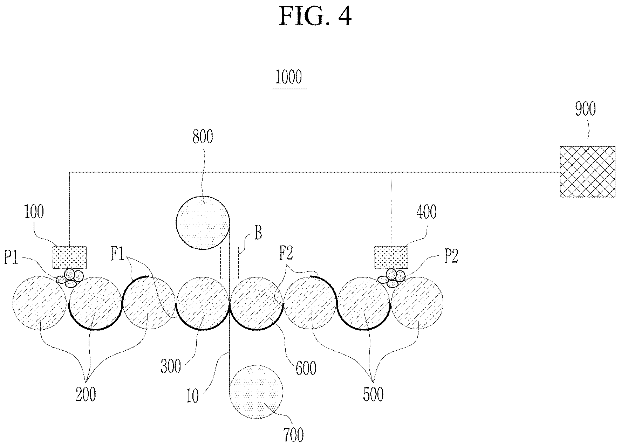

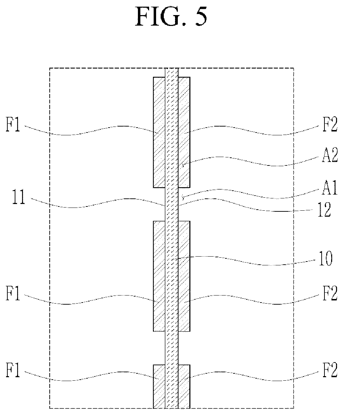

Hereinafter, an apparatus 1000 for manufacturing a dry electrode according to other embodiments will be described with reference to FIG. 4 and FIG. 5. Portions of the other embodiments that are different from the dry electrode manufacturing apparatus 1000 described above will be described.

FIG. 4 is a side view showing the apparatus 1000 for manufacturing the dry electrode according to the other embodiments.

Referring to FIG. 4, the dry electrode manufacturing apparatus 1000 according to the other embodiments may include a first feeder 100, a first roller 200, a first laminating roller 300, a second feeder 400, a second roller 500, a second laminating roller 600, a source roll 700, a rewinding roll 800, and a control portion (or a controller) 900.

The control portion 900 may be connected to the first feeder 100 and the second feeder 400. The control portion 900 may control timing of supply of the first fine powder P1 from the first feeder 100 and may control timing of supply of the second fine powder P2 from the second feeder 400. The control portion 900 may include various control means (or various control devices).

The control portion 900 may be connected to each of a discharge means (or a discharge device) of the first feeder 100 and a discharge means (or a discharge device) of the second feeder 400 to control timing of supply of the first fine powder P1 discharged through the discharge means of the first feeder 100 and timing of supply of the second fine powder P2 discharged through the discharge means of the second feeder 400, but the present disclosure is not limited thereto.

FIG. 5 is a side view showing that a first free-standing film F1 and a second free-standing film F2 that are laminated on a current collector 10 shown in a portion B of FIG. 4.

Referring to FIG. 4 and FIG. 5, the control portion 900 may control the timing of supply of the first fine powder P1 of the first feeder 100. The first feeder 100 controlled by the control portion 900 may intermittently supply the first fine powder P1 to the plurality of first rollers 200. The plurality of first rollers 200 may calender the intermittently supplied first fine powder P1 into a plurality of first free-standing films F1 spaced apart from each other. The first laminating roller 300 may intermittently laminate each of the plurality of first free-standing films F1 onto the first surface 11 of a current collector 10. The timing of supply of the first fine powder P1 from the first feeder 100 may be controlled by the control portion 900 such that the first fine powder P1 is intermittently supplied to the plurality of first rollers 200 and the first free-standing films F1 spaced apart from each other are calendered by the plurality of first rollers 200. Each of the plurality of first free-standing films F1 may be intermittently laminated onto the first surface 11 of the current collector 10 by the first laminating roller 300, so that the first free-standing film F1 is coated on a coating portion A2 of the current collector 10 shown in FIG. 5 and the first free-standing film F1 is not coated on an uncoated portion A1 of the current collector 10. Thus, the dry electrode including the coating portion A2 coated with an electrode active material and the uncoated portion A1 that is not coated with the electrode active material may be manufactured.

The control portion 900 may control timing of supply of the second fine powder P2 from the second feeder 400. The second feeder 400 controlled by the control portion 900 may intermittently supply the second fine powder P2 to the plurality of second rollers 500. The plurality of second rollers 500 may calender the intermittently supplied second fine powder P2 into the plurality of second free-standing films F2 that are spaced apart from each other. The second laminating roller 600 may intermittently laminate each of the plurality of second free-standing films F2 onto the second surface 12 of the current collector 10. The timing of supply of the second fine powder P2 from the second feeder 400 may be controlled by the control portion 900 such that the second fine powder P2 is intermittently supplied to the plurality of second rollers 500 and the plurality of second free-standing films F2 are calendered by the plurality of second rollers 500. Each of the plurality of second free-standing films F2 may be intermittently laminated onto the second surface 12 of the current collector 10 by the second laminating roller 600 such that, as shown in FIG. 5, the second free-standing film F2 is coated on the coating portion A2 of the current collector 10 and the second free-standing film F2 is not coated on the uncoated portion A1 of the current collector 10. Thus, the dry electrode including the coating portion A2 coated with an electrode active material and the uncoated portion A1 that is not coated with the electrode active material may be manufactured.

The control portion 900 may synchronize timing of supply of the first fine powder P1 from the first feeder 100 with timing of supply of the second fine powder P2 from the second feeder 400 such that the first free-standing films F1 and the second free-standing films F2 respectively laminated on the first surface 11 and the second surface 12 of the current collector 10 overlap each other in a horizontal direction as shown in FIG. 5. As another example, the control portion 900 may synchronize timing of supply of the first fine powder P1 from the first feeder 100 with timing of supply of the second fine powder P2 from the second feeder 400 such that the plurality of first free-standing films F1 and the plurality of second free-standing films F2 respectively laminated on the first surface 11 and the second surface 12 of the current collector 10 do not overlap each other in a horizontal direction in the manner shown in FIG. 5.

The first free-standing film F1 and the second free-standing film F2 may be intermittently laminated on the current collector 10 such that the dry electrode manufacturing apparatus 1000 manufacturing the dry electrode including the uncoated portion A1 is provided.

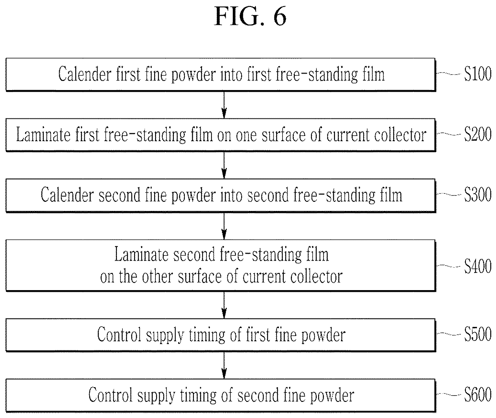

A method of manufacturing the dry electrode according to embodiments will be described with reference to FIG. 6. The dry electrode manufacturing method according to the embodiments may be performed using the dry electrode manufacturing apparatus 1000 according to the embodiments described above, but the present disclosure is not limited thereto.

FIG. 6 is a flowchart showing the method for manufacturing the dry electrode according to an embodiment.

Referring to FIG. 6, the first fine powder P1 may be calendered into the first free-standing film F1 (step S100). For example, the first fine powder P1 may be calendered into the first free-standing film F1 using various known calendering means (or various known calendering devices) such as a calendering roller and the like.

Next, the first free-standing film F1 may be laminated on a first surface 11 of the current collector 10 (step S200). For example, the first free-standing film F1 may be laminated on the first surface 11 of the current collector 10 using various known laminating means (or various known laminating devices) such as a laminating roller and the like.

Next, the second fine powder P2 may be calendered into the second free-standing film F2 (step S300). For example, the second fine powder P2 may be calendered into the second free-standing film F2 using various known calendering means (or various known calendering devices) such as a calendering roller and the like.

Next, the second free-standing film F2 may be laminated on the second surface 12 of the current collector 10 (step S400). For example, the second free-standing film F2 may be laminated on the second surface 12 of the current collector 10 using various known laminating means (or various known laminating devices) such as a laminating roller and the like.

Next, timing of supply of the first fine powder P1 may be controlled (step S500). For example, timing of supply of the first fine powder P1 may be controlled and the first fine powder P1 may be intermittently supplied using various known control means (or various known control devices), so that the intermittently supplied first fine powder P1 is calendared into the plurality of first free-standing films F1 that are spaced apart from each other.

Each of the plurality of first free-standing films F1 that are spaced apart from each other may be intermittently laminated on the first surface 11 of the current collector 10. The timing of supply of the first fine powder P1 may be controlled such that the first fine powder P1 is intermittently supplied and the plurality of first free-standing films F1 spaced apart from each other are calendered. Each of the plurality of first free-standing films F1 may be intermittently laminated on the first surface 11 of the current collector 10 such that the first free-standing film F1 is coated on a coating portion A2 of the current collector 10 and the first free-standing film F1 is not coated on an uncoated portion A1 of the current collector 10. Thus, the dry electrode including the coating portion A2 coated with an electrode active material and the uncoated portion A1 that is not coated with the electrode active material may be manufactured.

Next, timing of supply of the second fine powder P2 may be controlled (step S600). For example, timing of supply of the second fine powder P2 may be controlled and the second fine powder P2 may be intermittently supplied using various known control means (or various known control devices) such that the intermittently supplied second fine powder P2 is calendared into the plurality of second free-standing films F2 that are spaced apart from each other.

Each of the plurality of second free-standing films F2 that are spaced apart from each other may be intermittently laminated on the second surface 12 of the current collector 10. The timing of supply of the second fine powder P2 may be controlled such that the second fine powder P2 is intermittently supplied and the plurality of second free-standing films F2 that are spaced apart from each other are calendered. Each of the plurality of second free-standing films F2 may be intermittently laminated on the second surface 12 of the current collector 10 such that the second free-standing film F2 is coated on a coating portion A2 of the current collector 10 and the second free-standing film F2 is not coated on an uncoated portion A1 of the current collector 10. Thus, the dry electrode including the coating portion A2 coated with an electrode active material and the uncoated portion A1 that is not coated with the electrode active material may be manufactured.

The timing of supply of the first fine powder P1 and the timing of supply of the second fine powder P2 may be simultaneously controlled to be synchronized with each other such that each of the first free-standing films F1 overlaps one of the second free-standing films F2 respectively laminated on the first surface 11 and the second surface 12 of the current collector 10 in a thickness direction of the current collector 10.

As another example, the timing of supply of the first fine powder P1 and the timing of supply of the second fine powder P2 may be simultaneously controlled to be synchronized with each other such that each of first free-standing films F1 does not overlap one of second free-standing films F2 respectively laminated on the first surface 11 and the second surface 12 of the current collector in the thickness direction of the collector.

The first free-standing film F1 and the second free-standing film F2 may be intermittently laminated on the current collector 10 so that the dry electrode manufacturing method manufacturing the dry electrode including the uncoated portion is provided.

While this disclosure has been described in connection with what is presently considered to be practical embodiments, it is to be understood that the disclosure is not limited to the disclosed embodiments. The disclosure covers various modifications and equivalent arrangements.

### Description of symbols

Current collector 10, first surface 11, second surface 12, first feeder 100, first roller 200, first laminating roller 300, second feeder 400, second roller 500, second laminating roller 600, source roll 800, rewinding roll 800, control portion 900, uncoated portion A1, coated portion A2, first suction portion 910, first sensor 920, third suction portion 930, second sensor 940, dry electrode manufacturing apparatus 1000 first free-standing film F1, second free-standing film F2, first fine powder P1, second fine powder P2.

Embodiments are set out in the following clauses:
Clause 1. An apparatus for manufacturing a dry electrode, comprising:
   a first feeder that supplies a first fine powder;
   a plurality of first rollers that calender the first fine powder supplied from the first feeder into a first free-standing film;
   a first laminating roller that is adjacent to the plurality of first rollers and laminates the first free-standing film on one surface of a current collector; and
   a control portion that is connected to the first feeder and controls a supply timing of the first fine powder of the first feeder.
Clause 2. The apparatus of clause 1, wherein the first feeder of which the supply timing is controlled by the control portion intermittently supplies the first fine powder to the plurality of first rollers, and the plurality of first rollers calender the first fine powder into a plurality of first free-standing films spaced apart from each other.
Clause 3. The apparatus of clause 2, wherein the first laminating roller intermittently laminates each of the plurality of first free-standing films on the one surface of the current collector.
Clause 4. The apparatus of clause 2 or clause 3, wherein the control portion comprises a first suction portion that is adjacent to the first feeder and intermittently sucks the first fine powder discharged from the first feeder.
Clause 5. The apparatus of clause 4, wherein the first suction portion is connected to the first feeder and resupplies the first fine powder sucked from the first feeder to the first feeder.
Clause 6. The apparatus of clause 4 or clause 5, wherein the control portion further includes a first sensor disposed on the plurality of first rollers and sensing an interval between the plurality of first free-standing films spaced apart from each other.
Clause 7. The apparatus of clause 6, wherein the control portion controls an intermittent suction timing of the first fine powder of the first suction portion based on the interval between the plurality of first free-standing films sensed by the first sensor.
Clause 8. The apparatus of any of clauses 1 to 7, further comprising:
   a second feeder that supplies a second fine powder;
   a plurality of second rollers that calender the second fine powder supplied from the second feeder into a second free-standing film; and
   a second laminating roller that is disposed between the plurality of second rollers and the first laminating roller and laminates the second free-standing film on the other surface of the current collector,
   wherein the control portion is connected to the second feeder and controls a supply timing of the second fine powder of the second feeder.
Clause 9. The apparatus of clause 8, wherein the second feeder of which the supply timing is controlled by the control portion intermittently supplies the second fine powder to the plurality of second rollers, and the plurality of second rollers calender the second fine powder into a plurality of second free-standing films spaced apart from each other.
Clause 10. The apparatus of clause 9, wherein the second laminating roller intermittently laminates each of the plurality of second free-standing films on the other surface of the current collector.
Clause 11. The apparatus of any of clauses 8 to 10, wherein the control portion comprises a second suction portion that is adjacent to the second feeder and intermittently sucks the second fine powder discharged from the second feeder.
Clause 12. The apparatus of clause 11, wherein the second suction portion is connected to the second feeder and resupplies the second fine powder sucked from the second feeder to the second feeder.
Clause 13. The apparatus of clause 11 or clause 12, wherein the control portion further includes a second sensor disposed on the plurality of second rollers and sensing an interval between the plurality of second free-standing films spaced apart from each other.
Clause 14. The apparatus of clause 13, wherein the control portion controls an intermittent suction timing of the second fine powder of the second suction portion based on the interval between the plurality of second free-standing films sensed by the second sensor.
Clause 15. The apparatus of any of clauses 8 to 14, further comprising:
   a source roll that supplies the current collector between the first laminating roller and the second laminating roller; and
   a rewinding roll that rewinds the current collector on which the first free-standing film and the second free-standing film are laminated.
Clause 16. A method for manufacturing a dry electrode, comprising:
   calendering a first fine powder into a first free-standing film;
   laminating the first free-standing film on one surface of a current collector; and
   controlling a supply timing of the first fine powder.
Clause 17. The method of clause 16, wherein the controlling of the supply timing of the first fine powder comprises intermittently supplying the first fine powder, and the calendering of the first fine powder into the first free-standing film comprises calendering the first fine powder intermittently supplied into a plurality of first free-standing films spaced apart from each other.
Clause 18. The method of clause 17, wherein the laminating of the first free-standing film on the one surface of the current collector comprises intermittently laminating each of the plurality of first free-standing films on the one surface of the current collector.
Clause 19. The method of any of clauses 16 to 18, further comprising:
   calendering a second fine powder into a second free-standing film;
   laminating the second free-standing film on the other surface of the current collector; and
   controlling a supply timing of the second fine powder.
Clause 20. The method of clause 19, wherein the controlling of the supply timing of the first fine powder and the controlling of the supply timing of the second fine powder are simultaneously performed.

## Claims

1. An apparatus for manufacturing a dry electrode, the apparatus comprising:
a first feeder configured to supply a first fine powder;
a plurality of first rollers configured to calender the first fine powder supplied from the first feeder into a first free-standing film;
a first laminating roller that is positioned adjacent to the plurality of first rollers, the first laminating roller being configured to laminate the first free-standing film on a surface of a current collector; and
a control portion that is connected to the first feeder and is configured to control timing of supply of the first fine powder by the first feeder.

2. The apparatus as claimed in claim 1, wherein the control portion is configured to control the first feeder to intermittently supply the first fine powder to the plurality of first rollers, and the plurality of first rollers are configured to calender the first fine powder into a plurality of first free-standing films that are spaced apart from each other.

3. The apparatus as claimed in claim 2, wherein the first laminating roller is configured to intermittently laminate each of the first free-standing films to the surface of the current collector.

4. The apparatus as claimed in claim 2 or claim 3, wherein the control portion comprises a first suction portion that is positioned adjacent to the first feeder, and the first suction portion is configured to intermittently suck the first fine powder discharged from the first feeder.

5. The apparatus as claimed in claim 4, wherein the first suction portion is connected to the first feeder and is configured to resupply the first fine powder sucked from the first feeder back to the first feeder.

6. The apparatus as claimed in claim 4 or claim 5, wherein the control portion further includes a first sensor disposed with the plurality of first rollers and configured to sense an interval between each of the first free-standing films; optionally:
wherein the control portion is configured to control an intermittent suction timing of the first fine powder by the first suction portion based on the interval between the first free-standing films sensed by the first sensor.

7. The apparatus as claimed in any preceding claim, wherein the surface of the free-standing film is a first surface, and wherein the apparatus further comprises:
a second feeder configured to supply a second fine powder;
a plurality of second rollers configured to calender the second fine powder supplied from the second feeder into a second free-standing film; and
a second laminating roller that is positioned between the plurality of second rollers and the first laminating roller, the second laminating roller being configured to laminate the second free-standing film on a second surface of the current collector, and
wherein the control portion is connected to the second feeder and configured to control a timing of supply of the second fine powder by the second feeder; optionally:
(i) wherein the control portion is configured to control the second feeder to intermittently supply the second fine powder to the plurality of second rollers, and the plurality of second rollers are configured to calender the second fine powder into a plurality of second free-standing films that are spaced apart from each other; further optionally:
(ii) wherein the second laminating roller is configured to intermittently laminate each of the second free-standing films on the second surface of the current collector.

8. The apparatus as claimed in claim 7, wherein the control portion comprises a second suction portion that is positioned adjacent to the second feeder, and the suction portion is configured to intermittently suck the second fine powder discharged from the second feeder; optionally:
wherein the second suction portion is connected to the second feeder and is configured to resupply the second fine powder sucked from the second feeder back to the second feeder.

9. The apparatus as claimed in claim 8, wherein the control portion further includes a second sensor disposed with the plurality of second rollers and configured to sense an interval between each of the second free-standing films; optionally:
wherein the control portion is configured to control an intermittent suction timing of the second fine powder of the second suction portion based on the interval between the second free-standing films sensed by the second sensor.

10. The apparatus as claimed in any of claims 7 to 9, further comprising a source roll configured to supply the current collector between the first laminating roller and the second laminating roller; and
a rewinding roll configured to rewind the current collector on which the first free-standing film and the second free-standing film are laminated.

11. A method for manufacturing a dry electrode, the method comprising:
calendering a first fine powder into a first free-standing film;
laminating the first free-standing film on a surface of a current collector; and
controlling timing of supply of the first fine powder.

12. The method as claimed in claim 11, wherein the controlling of the timing of supply of the first fine powder comprises intermittently supplying the first fine powder, and the calendering of the first fine powder into the first free-standing film comprises calendering the first fine powder intermittently supplied into a plurality of first free-standing films that are spaced apart from each other.

13. The method as claimed in claim 12, wherein the laminating of the first free-standing film on the surface of the current collector comprises intermittently laminating each of the first free-standing films on the surface of the current collector.

14. The method as claimed in any of claims 11 to 13, wherein the surface of the current collector is a first surface of the current collector, and
wherein the method further comprises:
calendering a second fine powder into a second free-standing film;
laminating the second free-standing film on a second surface of the current collector; and
controlling timing of supply of the second fine powder.

15. The method as claimed in claim 14, wherein the controlling timing of the supply of the first fine powder and the controlling of timing of supply of the second fine powder are simultaneously performed.
